(19) Europäisches Patentamt

European Patent Office

Office européen des brevets

(11) **EP 1 619 816 A2**

(12) **EUROPEAN PATENT APPLICATION**

<table>
<tr><td>(43) Date of publication:<br>    **25.01.2006 Bulletin 2006/04**</td><td>(51) Int Cl.:<br>    **H04L 1/00** (2006.01)    **H04L 25/02** (2006.01)</td></tr>
<tr><td>(21) Application number: **05015475.6**</td><td></td></tr>
<tr><td>(22) Date of filing: **15.07.2005**</td><td></td></tr>
</table>

<table>
<tr><td>(84) Designated Contracting States:<br>    **AT BE BG CH CY CZ DE DK EE ES FI FR GB GR**<br>    **HU IE IS IT LI LT LU LV MC NL PL PT RO SE SI**<br>    **SK TR**<br>    Designated Extension States:<br>    **AL BA HR MK YU**</td><td>(72) Inventor: **Seo, Kwang-Deok,**<br>    **Computer Info.Communications**<br>    **Heungeop-Myeon**<br>    **Wonju**<br>    **Gangwon-Do (KR)**</td></tr>
<tr><td>(30) Priority: **22.07.2004 KR 2004057272**</td><td rowspan="2">(74) Representative: **von Hellfeld, Axel**<br>    **Wuesthoff & Wuesthoff**<br>    **Patent- und Rechtsanwälte**<br>    **Schweigerstrasse 2**<br>    **81541 München (DE)**</td></tr>
<tr><td>(71) Applicant: **LG Electronics, Inc.**<br>    **Seoul (KR)**</td></tr>
</table>

(54) **Apparatus and method for measuring round trip delay time of variable bit rate multimedia data**

(57) Provided are apparatus and method for measuring a round trip delay time of variable bit rate multimedia data, in which when a real-time transport control protocol (RTCP) receiver report (RR) packet is received from a receiving side, an instant round trip delay time is calculated using a corresponding field value of the receiver report packet, a current moving average round trip delay time is estimated using the calculated instant round trip delay time and a moving average round trip delay time of a previous time, and an effective transmission rate is updated using the measured current moving average round trip delay time. Therefore, the effective transmission rate is estimates so as to gradually react even to a great instantaneous change of a network, and accordingly deterioration of the multimedia reception quality caused by a drastic change of transmission quantity of multimedia data can be prevented.

FIG. 3

EP 1 619 816 A2

**Description**

BACKGROUND OF THE INVENTION

1. Field of the Invention

The present invention relates to an apparatus and method for measuring a round trip delay time (RTT) used for effectively calculating an effective transmission rate at the time of sending a variable bit rate (VBR) multimedia data through a radio (wireless) network or an Internet network.

2. Background of the Related Art

In general, in order to send real-time video (or multimedia data) through wired/wireless Internet protocol (IP) networks, conditions such as a sufficient bandwidth of a channel, a less delay, a less packet loss, and the like must be satisfied. However, a network layer on current wired/wireless IP networks does not provide appropriate functions for satisfying quality of services (QoS) which are required for a video transmission. Therefore, the QoS must be ensured by a higher layer of the network layer. For this, a real-time transport protocol (RTP) and a real-time transport control protocol (RTCP) which are operated on a transport layer have been proposed. By using the RTP and RTCP, characteristics according to time limit can be considered, and it is possible to adaptively deal with a loss occurring within a network. Especially, because the RTCP provides to a sender (sending point) information of a current network condition and a reception QoS, the information provided can be used such that the sender automatically adapts to the network condition and the reception QoS to regulate a transmission rate, or a network manager measures a multicast performance.

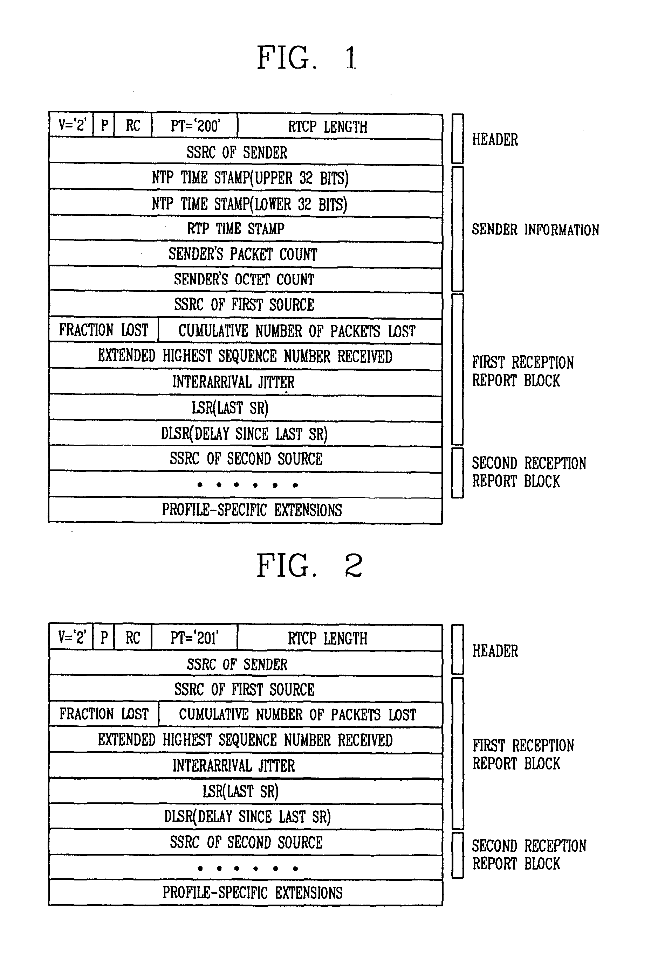

Fig. 1 shows a structure of a sender report (SR) packet of the RTCP, and Fig. 2 shows a structure of a receiver report (RR) packet of the RTCP. The SR packet is sent from the sender (sending point) to the receiver (receiving point) when multimedia data is sent. The SR packet can be used when the sender performs sending and receiving at the same time or only sending. The RR packet is sent from the receiver to the sender when the multimedia data is received.

The SR packet and the RR packet include reception report blocks, respectively, each of which includes statistical information of RTP packets sent by one sender and feedbacks the statistical information from the receiver to the one sender. The SR packet further includes a packet length, sender (sending point) information, sending time information, sender's packet count, and sender's octet count.

Each of the reception report blocks further includes information of such fraction lost, a last SR timestamp (LSR) and a delay since last SR (DLSR). The fraction lost denotes a packet loss rate, the LSR denotes 32 bits which are parts of 64 bits of a network time protocol (NTP) timestamp of a currently-received RTCP SR packet, and the DLSR denotes a delay time since the last SR packet. That is, the DLSR denotes, by $1/2^{32}$ (1/65536) second unit, the delay time until the reception report block of the RR is sent after the last SR packet of the sender is received. The time information associated with the packet sending such as the LSR, the DLSR may be an important clue to estimate a transmission rate of the multimedia data to be transmitted later by the sender.

That is, in a typical method for estimating an effective transmission rate using status information of a network, the RTT is used, and the RTT is measured by the SR and RR of the RTCP.

A typical method for measuring the RTT will now be explained. The sender sends the SR which includes the NTP timestamp value when it is sent. The receiver remembers the time of having received the SR. As a result, when the receiver sends the RR to the sender, the receiver records the time interval from the time of having received the SR and to the time of sending the RR in a DLSR field of the RR packet. The receiver records information of partial bits of the NTP timestamp value of the received SR in an LSR field of the RR packet, and thereafter sends the RR packet to the sender. The sender checks its reception time of the RR packet. Thus, the sender subtracts the received DLSR field value and LSR field value from its reception time of the RR packet so as to measure the RTT.

According to the method aforementioned, because the RTT is an instant RTT obtained from the RTCP SR packet information or the RTCP RR packet information, it is sensitive to an instantaneous change of a channel circumstance. Therefore, when the effective transmission rate is estimated by adopting the RTT which is drastically changed according to the instantaneous change of the channel circumstance, the effective transmission rate also has severe fluctuation. In the VBR multimedia sending system such as a VBR video sending system, the drastic fluctuation of the effective transmission rate causes a severe variation of image quality or sound quality. As a result, a great load is generated in controlling a buffer for a network transmission, and a multimedia quality that a user feels is lowered.

SUMMARY OF THE INVENTION

Therefore, in order to solve those problems, an object of the present invention is to provide an apparatus for measuring a round trip delay time (RTT) of variable bit rate (VBR) multimedia data capable of obtaining an effective transmission rate gradually reflecting a drastic change of a channel circumstance and preventing a multimedia reception quality from being lowered due to estimation of the effective transmission rate which is gradually fluctuated, by measuring round trip delay time information using a moving average calculation and estimating the effective transmission rate using the measured moving average round trip delay time information, and a method thereof.

To achieve these and other advantages and in accordance with the purpose of the present invention, as embodied and broadly described herein, there is provided an apparatus for measuring a round trip delay time of variable bit rate (VBR) multimedia data comprising: a video encoder for encoding multimedia data; a transmission rate controller for controlling the transmission rate of the encoded multimedia data according to an effective transmission rate; a first sending/receiving unit for sending the multimedia data through a channel allocated; a round trip delay time (RTT) measuring unit for measuring an instant round trip delay time using a receiver report (RR) packet received through the first sending/receiving unit; a moving average calculating unit for calculating a moving average round trip delay time using the measured instant round trip delay time; and a transmission rate estimating unit for estimating the effective transmission rate using the calculated moving average round trip delay time and providing the estimated effective transmission rate to the transmission rate controller.

To achieve these and other advantages and in accordance with the purpose of the present invention, as embodied and broadly described herein, there is provided a method for measuring a round trip delay time of variable bit rate (VBR) multimedia data comprising: receiving a receiver report (RR) packet of a real-time transport control protocol (RTCP) from a receiving side; measuring a moving average round trip delay time using the RR packet; and estimating an effective transmission rate using the measured moving average round trip delay time.

The foregoing and other objects, features, aspects and advantages of the present invention will become more apparent from the following detailed description of the present invention when taken in conjunction with the accompanying drawings.

BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Fig. 1 shows a structure of a typical RTCP sender report (SR) packet;
Fig. 2 shows a structure of a typical RTCP receiver report (RR) packet;
Fig. 3 shows a construction of an apparatus for measuring a round trip delay time of variable bit rate (VBR) multimedia data according to the present invention;
Fig. 4 is a flow chart showing sequential steps of a method for measuring a round trip delay time of variable bit rate (VBR) multimedia data according to the present invention;
Fig. 5 shows a method for measuring an instant round trip delay time by a round trip delay time measuring unit; and
Fig. 6 is a graph showing a fluctuation range, respectively, of an instant round trip delay time and a moving average round trip delay time.

DETAILED DESCRIPTION OF THE PREFERRED EMBODIMENTS

Reference will now be made in detail to the preferred embodiments of the present invention, examples of which are illustrated in the accompanying drawings.

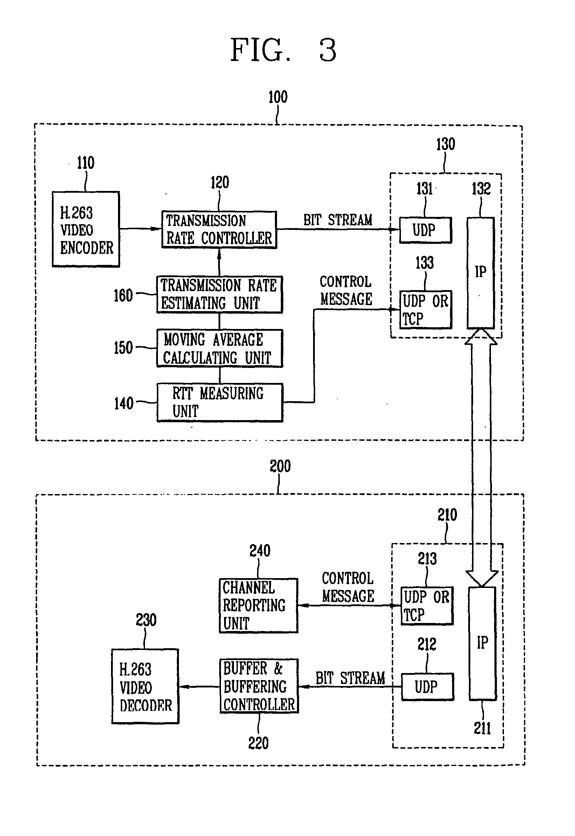

Fig. 3 shows a construction of an apparatus for measuring a round trip delay time of variable bit rate (VBR) multimedia data according to the present invention. As shown in the drawing, the apparatus for measuring the round trip delay time of the VBR multimedia data according to the present invention includes a real-time video sender 100 and a real-time video receiver 200. The real-time video sender 100 and the real-time video receiver 200 can be connected to each other through a radio (wireless) network and through a wired network.

The real-time video sender 100 includes: a video encoder 110 for encoding multimedia data; a transmission rate controller 120 for controlling the encoded multimedia data according to an effective transmission rate; a sending/receiving unit 130 for sending the multimedia data to the real-time video receiver 200 via a channel allocated; a round trip delay time measuring unit 140 for measuring an instant round trip delay time using a real-time transport control protocol (RTCP) receiver report (RR) packet received through the sending/receiving unit 130; a moving average calculating unit 150 for calculating a moving average round trip delay time using the measured instant round trip delay time; and a transmission rate estimating unit 160 for estimating the effective transmission rate of multimedia data to be next sent using the calculated moving average round trip delay time and providing the estimated effective transmission rate to the transmission rate controller 120.

The real-time video receiver 200 includes: a sending/receiving unit 210 for receiving the multimedia data sent by the real-time video sender 100 via the allocated channel; a channel reporting unit 240 for checking a state of the allocated channel using an RTCP (Real-time Transport Control Protocol) SR (Sender Report) packet having received by the sending/receiving unit 210 to generate an RTCP RR (Receiver Report) packet, and sending the RTCP RR packet to the real-time vide sender 100 by the sending/receiving unit 210; a buffer/buffering controller 220 for buffering the multimedia data received by the sending/receiving unit 210; and a decoder 230 for decoding the multimedia data having passed through the buffer/buffering controller 220.

The sending/receiving units 130 and 210 include an Internet protocol (IP), a transmission control protocol (TCP), and a user datagram protocol (UDP), respectively.

An operation of such configured apparatus for measuring the round trip delay time of the VBR multimedia data according to the present invention will now be explained.

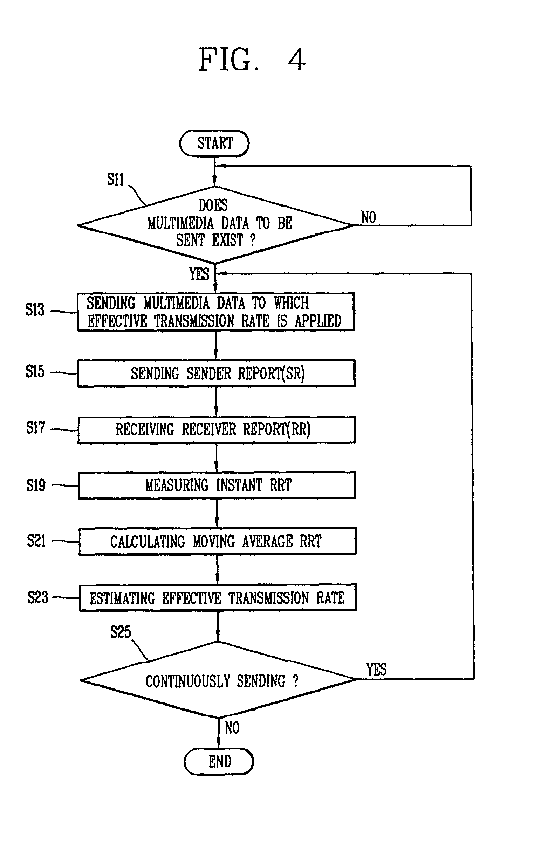

Fig. 4 is a flow chart showing sequential steps of a method for measuring a round trip delay time of VBR multimedia data according to the present invention.

When multimedia data to be sent exists (S11), the real-time video sender 100 sends the multimedia data at the measured effective transmission rate (S13). The real-time video sender 100 then generates sender report (SR) information and sends the information (S15).

The real-time video receiver 200 receives the multimedia data sent by the real-time video sender 100 via a channel allocated. The channel reporting unit 240 of the real-time video receiver 200 generates the RTCP RR packet to report information of the channel status and sends the RTCP RR packet to the real-time video sender 100 via the channel.

The RTCP RR packet includes characteristic information like an RTCP packet length, a sender (sending point), a fraction lost, a cumulative number of packets lost, an extended highest sequence number received, a last SR (LSR), a delay since last SR (DLSR), and so on.

Once receiving the RTCP RR packet from the real-time video receiver 200 (S17), the round trip delay time (RTT) measuring unit 140 of the real-time video sender 100 measures an instant RTT by analyzing the RTCP RR packet (S19). Afterwards, the moving average calculating unit 150 of the real-time video sender 100 calculates a current moving average RTT using the instant RTT and a previous moving average RTT (refer to Equation 1 which will be explained later) (S21). The transmission rate estimating unit 160 of the real-time video sender 100 estimates the effective transmission rate using the measured moving average RTT and information such as a packet loss rate and the packet length (refer to Equation 2 which will be explained later) (S23).

The transmission rate estimating unit 160 provides the estimated effective transmission rate to the transmission rate controller 120. If multimedia data to be sent further exists (S25), the transmission rate controller 120 controls the transmission rate of the multimedia data according to the effective transmission rate provided by the transmission rate estimating unit 160 (S13).

An explanation will now be provided for a method for measuring the moving average RTT in order for the real-time video sender 100 to estimate the effective transmission rate which is gradually fluctuated even by an instantaneous change of a network state.

The method for measuring the moving average RTT according to the present invention may be the same as shown in Equation 1.

$$\text{RTT(t)} = (1-j) \cdot \text{RTT(t-1)} + j \cdot \text{RTT}_{new} \qquad \text{Equation 1}$$

The $\text{RTT}_{new}$ denotes a new instant RTT, and the RTT(t) denotes an RTT value obtained by calculating the $\text{RTT}_{new}$ and thereafter calculating the moving average for the $\text{RTT}_{new}$ at time t. The j denotes a weight for determining an adaptation speed with respect to the network state. When the j value is great, the effective transmission rate can rapidly be adapted to a new network state, which may cause a drastic fluctuation of the effective transmission rate. Conversely, when the j value is small, the effective transmission rate is tolerant to the variation of the network state. Establishing the j value must be performed by considering a relationship between an adaptability according to the fluctuation of the effective transmission rate of the network and a drastic variation of multimedia quality. As a result of an experiment, when the j value, for instance, is 0.1 ~ 0.2, functions of the moving average calculating unit 150 and the transmission rate estimating unit 160 are excellent. That is, the new instant RTT $\text{RTT}_{new}$ has greater weight than the moving average RTT RTT(t-1) of the previous time t-1 does, the transmission rate can gradually react even to a great instantaneous change of the network.

The moving average RTT RTT(t) at the current time t is obtained by calculating the new instant RTT $\text{RTT}_{new}$, and thereafter calculating the measured instant RTT and the moving average RTT RTT(t-1) of the previous time t-1.

The method for calculating the instant RTT $\text{RTT}_{new}$ will now be explained.

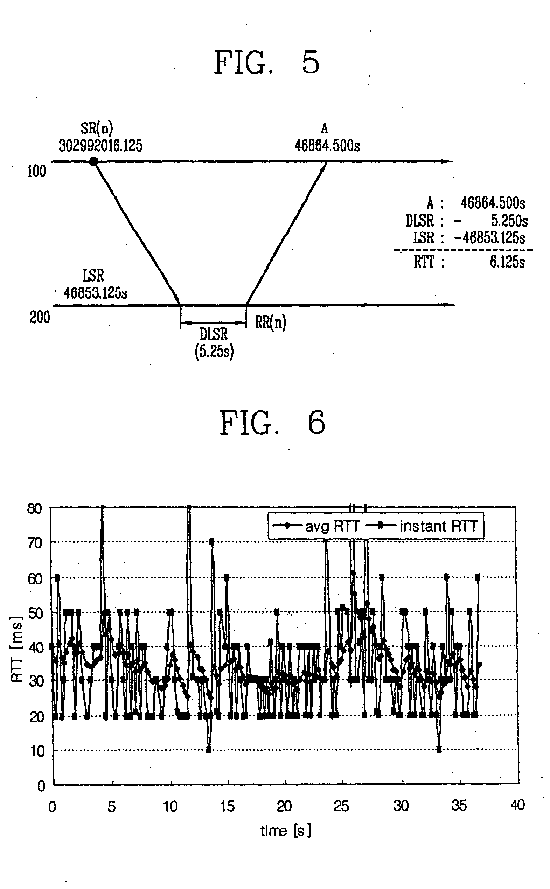

Fig. 5 shows the method for measuring the instant RTT by the RTT measuring unit 140.

The real-time video sender 100 records a sending time at the time of sending the SR packet, namely, an NTP (Network Time Protocol) timestamp value (e.g., 302992016.125) in the SR packet and then sends the SR packet. The sending time of the SR packet is indicated with a real number portion and a decimal portion on the basis of a decimal point. Upper 32 bits (an NTP timestamp (upper 32-bit) field in Fig. 1) are allocated to the real number portion and lower 32 bits (an NTP timestamp (lower 32-bit) field) are allocated to the decimal portion.

The channel reporting unit 240 of the real-time video receiver 200 receives the SR packet, stores the reception time thereof, and records the time interval from the reception time up to sending the RR packet in the DLSR field of the RR packet. The channel reporting unit 240 records information of partial bits of the NTP timestamp value of the received SR packet in the LSR field of the RR packet and then sends the RR packet to the real-time video sender 100. That is, the channel reporting unit 240 records time information, which is indicated by 16 bits of the upper 32 bits of the NTP timestamp and 16 bits of the lower 32 bits of the NTP timestamp, in the LSR field of the RR packet. When the NTP timestamp value, for instance, is 302991016.125, the value of the LSR field is 46853.125 seconds.

When the RR packet is received from the real-time video receiver 200, the RTT measuring unit 140 of the real-time video sender 100 checks the reception time A of the RR packet. The RRT measuring unit 140 then calculates the instant RRT by subtracting the DLSR field value and the LSR field value of the RR packet from the reception time A. If the reception time A, for instance, is 46864.500 seconds, the instant RTT, as shown in Fig. 5, is 6.125 seconds.

The RTT measuring unit 140 provides the calculated instant RTT to the moving average calculating unit 150.

When the moving average RTT is measured according to Equation 1, the transmission rate estimating unit 160 estimates the effective transmission rate using a method such as Equation 2.

$$R(t) = \frac{1.22 \times s}{RTT(t) \times \sqrt{p(t)}}$$   Equation 2

the R(t) denotes the effective transmission rate, the p(t) denotes the packet loss rate, which is obtained by a fraction lost field of the RR packet. The RRT(t), as a value measured by the same method as Equation 1 by the moving average calculating unit 150, denotes the moving average RTT. The 's' denotes a packet size.

Fig. 6 is a graph showing a fluctuation range, respectively, of the instant RTT and the moving average RTT. The instant RTT obtained by a typical RTT measuring method is updated whenever the RTCP packet is received, regardless of the previous value, so as to be very fluctuant. However, the moving average RTT according to the present invention is operated as a moving average value so as to be gradually fluctuated.

Thus, in the apparatus for measuring the RTT of the VBR multimedia data according to the present invention, an average value of network state information is used to estimate the effective transmission rate so that the transmission rate can gradually react to the instantaneous change of the network state.

As aforementioned, in the present invention, as the RTT information is measured by the moving average calculation and the effective transmission rate can be estimated by using the measured moving average RTT information, the effective transmission rate which gradually reflects a drastic change of the channel circumstance can be obtained. In addition, as the effective transmission rate which is gradually fluctuated is estimated, the transmission rate of the multimedia data would not severely be fluctuated. As a result, deterioration of the multimedia reception quality caused by the drastic change of image quality and sound quality can be reduced.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

**Claims**

1.   An apparatus for measuring a round trip delay time of variable bit rate multimedia data in a variable bit rate multimedia data transmission system, comprising:

a video encoder for encoding multimedia data;
a transmission rate controller for controlling the transmission rate of the encoded multimedia data according to an effective transmission rate;

a first sending/receiving unit for sending the multimedia data via a channel allocated;

a round trip delay time (RTT) measuring unit for measuring an instant round trip delay time using a receiver report (RR) packet received by the first sending/receiving unit;

a moving average calculating unit for calculating a moving average round trip delay time using the measured instant round trip delay time; and

a transmission rate estimating unit for estimating the effective transmission rate using the calculated moving average round trip delay time and providing the estimated effective transmission rate to the transmission rate controller.

2. The apparatus of claim 1, further comprising:

a second sending/receiving unit for receiving the multimedia data via the allocated channel; and

a channel reporting unit for checking a state of the allocated channel using the sender report (SR) packet having received by the second sending/receiving unit to generate the receiver report (RR) packet, and sending the RR packet by the second sending/receiving unit.

3. The apparatus of claim 2, further comprising:

a buffer/buffering controller for buffering the multimedia data received by the second sending/receiving unit; and

a video decoder for decoding the multimedia data having passed through the buffer/buffering controller.

4. The apparatus of claim 1, wherein the moving average calculating unit measures the moving average round trip delay time by Equation as below,

$$RTT(t) = (1-j) \cdot RTT(t-1) + j \cdot RTT_{new}$$

wherein, the $RTT_{new}$ denotes a new instant round trip delay time, the RTT(t) denotes a round trip delay time value obtained by calculating the $RTT_{new}$ and thereafter calculating the moving average of the $RTT_{new}$ at time t, and the j denotes a weight for determining an adaptation speed with respect to the network state.

5. The apparatus of claim 4, wherein the weight is established such that the moving average round trip delay time of the previous time has a greater weight than the new instant round trip delay time does.

6. The apparatus of claim 1, wherein the round trip delay time measuring unit measures the instant round trip delay time by calculating a reception time of the receiver report packet, and a last SR field value and a delay since last SR (DLSR) field value of the receiver report packet.

7. The apparatus of claim 1, wherein the transmission rate estimating unit estimates the effective transmission rate according to Equation as below,

$$R(t) = \frac{1.22 \times s}{RTT(t) \times \sqrt{p(t)}}$$

wherein the R(t) denotes the effective transmission rate, the p(t) denotes a packet loss rate, the RTT(t) denotes the moving average round trip delay time, and s denotes a packet size.

8. A method for measuring a round trip delay time of variable bit rate multimedia data in a variable bit rate multimedia data transmission system, comprising:

receiving a receiver report packet of a real-time transport control protocol (RTCP) from a receiving side;

measuring a moving average round trip delay time using the receiver report packet; and

estimating an effective transmission rate using the measured moving average round trip delay time.

9. The method of claim 8, wherein the measuring step includes:

measuring a new instant round trip delay time using the receiver report packet; and
measuring a current moving average round trip delay time by calculating the new instant round trip delay time and a previous moving average round trip delay time.

**10.** The method of claim 9, wherein the current moving average round trip delay time is measured according to Equation as below,

$$RTT(t) = (1-j) \cdot RTT(t-1) + j \cdot RTT_{new}$$

wherein the $RTT_{new}$ denotes the new instant round trip delay time, the RTT(t) denotes a moving average round trip delay time calculated at time t, the RTT(t-1) denotes a moving average round trip delay time calculated at time t-1, and the j denotes a weight for determining an adaptation speed with respect to the network state.

**11.** The method of claim 10, wherein the weight is established such that the previous moving average round trip delay time (RTT(t-1)) has a greater weight than the new instant round trip delay time ($RTT_{new}$) does.

**12.** The method of claim 9, wherein in the method for measuring the instant round trip delay time, the instant round trip delay time is measured by calculating the reception time of the receiver report packet, and the a last SR (LSR) field value and a delay since last SR (DLSR) field value of the receiver report packet.

**13.** The method of claim 12, wherein the DLSR field value denotes the time interval from a time when the receiving side receives the RTCP sender report (SR) packet up to a time for sending the receiver report (RR) packet.

**14.** The method of claim 13, wherein the LSR field value, which is a value on the basis of a network time protocol (NTP) timestamp of the sender report packet, denotes a sending time of the sender report packet

**15.** The method of claim 8, further comprising controlling the transmission rate of multimedia data to be next transmitted according to the estimated effective transmission rate.

**16.** The method of claim 8, wherein the effective transmission rate is estimated according to Equation as below,

$$R(t) = \frac{1.22 \times s}{RTT(t) \times \sqrt{p(t)}}$$

wherein the R(t) denotes the effective transmission rate, the p(t) denotes a packet loss rate, the RTT(t) denotes the moving average round trip delay time, and s denotes a packet size.

# FIG. 1

| V='2' | P | RC | PT='200' | RTCP LENGTH | | HEADER |
|---|---|---|---|---|---|---|
| SSRC OF SENDER | | | | | | |
| NTP TIME STAMP(UPPER 32 BITS) | | | | | | |
| NTP TIME STAMP(LOWER 32 BITS) | | | | | | SENDER INFORMATION |
| RTP TIME STAMP | | | | | | |
| SENDER'S PACKET COUNT | | | | | | |
| SENDER'S OCTET COUNT | | | | | | |
| SSRC OF FIRST SOURCE | | | | | | |
| FRACTION LOST | CUMULATIVE NUMBER OF PACKETS LOST | | | | | |
| EXTENDED HIGHEST SEQUENCE NUMBER RECEIVED | | | | | | FIRST RECEPTION REPORT BLOCK |
| INTERARRIVAL JITTER | | | | | | |
| LSR(LAST SR) | | | | | | |
| DLSR(DELAY SINCE LAST SR) | | | | | | |
| SSRC OF SECOND SOURCE | | | | | | SECOND RECEPTION REPORT BLOCK |
| • • • • • • | | | | | | |
| PROFILE-SPECIFIC EXTENSIONS | | | | | | |

# FIG. 2

| V='2' | P | RC | PT='201' | RTCP LENGTH | | HEADER |
|---|---|---|---|---|---|---|
| SSRC OF SENDER | | | | | | |
| SSRC OF FIRST SOURCE | | | | | | |
| FRACTION LOST | CUMULATIVE NUMBER OF PACKETS LOST | | | | | |
| EXTENDED HIGHEST SEQUENCE NUMBER RECEIVED | | | | | | FIRST RECEPTION REPORT BLOCK |
| INTERARRIVAL JITTER | | | | | | |
| LSR(LAST SR) | | | | | | |
| DLSR(DELAY SINCE LAST SR) | | | | | | |
| SSRC OF SECOND SOURCE | | | | | | SECOND RECEPTION REPORT BLOCK |
| • • • • • • | | | | | | |
| PROFILE-SPECIFIC EXTENSIONS | | | | | | |

# FIG. 3

# FIG. 4

```
                    ┌─────────┐
                    │  START  │
                    └─────────┘
                         │
         S11             ▼
          \      ╱─────────────────╲
           ╲    ╱       DOES         ╲       NO
            ───<   MULTIMEDIA DATA TO BE >─────────┐
                ╲    SENT EXIST ?     ╱            │
                 ╲─────────────────╱              │
                         │ YES                    │
                         ▼                        │
    S13 ──┌───────────────────────────────────┐   │
          │   SENDING MULTIMEDIA DATA TO WHICH │   │
          │ EFFECTIVE TRANSMISSION RATE IS APPLIED│ │
          └───────────────────────────────────┘   │
                         │                        │
    S15 ──┌───────────────────────────────────┐   │
          │      SENDING SENDER REPORT(SR)     │   │
          └───────────────────────────────────┘   │
                         │                        │
    S17 ──┌───────────────────────────────────┐   │
          │    RECEIVING RECEIVER REPORT(RR)   │   │
          └───────────────────────────────────┘   │
                         │                        │
    S19 ──┌───────────────────────────────────┐   │
          │        MEASURING INSTANT RRT       │   │
          └───────────────────────────────────┘   │
                         │                        │
    S21 ──┌───────────────────────────────────┐   │
          │     CALCULATING MOVING AVERAGE RRT │   │
          └───────────────────────────────────┘   │
                         │                        │
    S23 ──┌───────────────────────────────────┐   │
          │  ESTIMATING EFFECTIVE TRANSMISSION RATE│ │
          └───────────────────────────────────┘   │
              S25        │                        │
               \         ▼                        │
                ╲─────────────────╲        YES    │
                 <  CONTINUOUSLY SENDING ? >───────┘
                ╱─────────────────╱
                         │ NO
                         ▼
                    ┌─────────┐
                    │   END   │
                    └─────────┘
```

# FIG. 5

# FIG. 6